(19) Europäisches Patentamt

European Patent Office

Office européen des brevets

(11) EP 1 351 830 B1

(12) FASCICULE DE BREVET EUROPEEN

(45) Date de publication et mention
de la délivrance du brevet:
**30.08.2006 Bulletin 2006/35**

(21) Numéro de dépôt: **01984837.3**

(22) Date de dépôt: **13.12.2001**

(51) Int Cl.:
**B60C 11/12** *(2006.01)*    **B60C 11/13** *(2006.01)*

(86) Numéro de dépôt international:
**PCT/EP2001/014693**

(87) Numéro de publication internationale:
**WO 2002/055324 (18.07.2002 Gazette 2002/29)**

(54) **BANDE DE ROULEMENT DIRECTIONNELLE PRESENTANT DES INCISIONS D'INCLINAISON VARIABLE**

DREHRICHTUNGSGEBUNDENE LAUFFLÄCHE MIT EINSCHNITTEN VON VARIABLER NEIGUNG

DIRECTIONAL RUNNING TREAD COMPRISING SIPES WITH VARIABLE INCLINATION

(84) Etats contractants désignés:
**AT BE CH CY DE DK ES FI FR GB GR IE IT LI LU MC NL PT SE TR**

(30) Priorité: **10.01.2001 FR 0100352**

(43) Date de publication de la demande:
**15.10.2003 Bulletin 2003/42**

(73) Titulaires:
• **Société de Technologie Michelin**
**63000 Clermont-Ferrand Cedex 09 (FR)**
• **MICHELIN RECHERCHE ET TECHNIQUE S.A.**
**1463 Granges-Paccot (CH)**

(72) Inventeur: **RADULESCU, Robert**
**F-63170 Perignat-Les-Sarlieve (FR)**

(74) Mandataire: **Diernaz, Christian**
**M. F. P. Michelin,**
**SGD/LG/PI-F35-Ladoux**
**63040 Clermont-Ferrand Cedex 09 (FR)**

(56) Documents cités:
**EP-A- 0 384 182**    **EP-A- 0 810 104**
**EP-A- 0 861 741**    **DE-A- 4 107 547**
**US-A- 2 246 479**

• **PATENT ABSTRACTS OF JAPAN vol. 1995, no. 04, 31 mai 1995 (1995-05-31) & JP 07 001918 A (TOYO TIRE & RUBBER CO LTD), 6 janvier 1995 (1995-01-06)**

**Description**

La présente invention se rapporte aux bandes de roulement pour pneumatiques destinés à équiper l'essieu avant des véhicules de transport et plus particulièrement des véhicules poids lourd, susceptibles d'effectuer de longs trajets à vitesse soutenue.

Ces pneumatiques comportent une armature de carcasse comprenant une pluralité de renforts disposés radialement, cette armature de carcasse étant elle-même surmontée d'une armature de sommet s'étendant dans la direction circonférentielle. Cette armature de sommet est composée d'au moins deux nappes superposées les unes sur les autres, chaque nappe étant formée de mélange de gomme renforcé par une pluralité de câbles ou fils peu extensibles, de préférence en acier, disposés parallèlement les uns aux autres dans une même nappe et suivant une direction faisant un angle au plus égal à 40°, les câbles d'une nappe à l'autre étant croisés entre eux. Cette armature de sommet peut être complétée, d'une part par deux demi nappes formées de câbles peu extensibles faisant avec la direction circonférentielle un angle compris entre 45° et 80°, d'autre part par au moins une nappe formées de câbles dits "élastiques" placés radialement à l'extérieur des nappes de sommet dont les câbles de renfort font un angle inférieur à 40°.

L'armature de sommet est par ailleurs surmontée sur sa surface radialement extérieure d'une bande de roulement réalisée avec au moins un mélange de caoutchouc dont la partie radialement à l'extérieur du pneumatique forme la surface de roulement destinée à venir en contact avec la chaussée pendant le roulage dudit pneumatique.

Pour obtenir une performance d'adhérence satisfaisante en roulage sur une chaussée recouverte d'eau, cette bande de roulement est pourvue sur sa surface extérieure, dans le cas de pneumatiques destinés à l'équipement de l'essieu avant directeur de véhicules poids lourd, d'une pluralité de rainures d'orientation générale circonférentielle. Ces rainures forment une sculpture comportant une pluralité de nervures, chaque nervure ayant une face de contact radialement à l'extérieur et des parois latérales pouvant être sensiblement perpendiculaires à la face de contact de la nervure ou bien pouvant faire un angle de dépouille non nul avec cette face. Pour améliorer encore l'adhérence, il est connu de pourvoir certaines des nervures avec une pluralité de rainures et/ou d'incisions d'orientation transversale. Ces découpures transversales et les rainures longitudinales délimitent une pluralité de motif de gomme présentant au cours du roulage un bord ou arête d'attaque, c'est-à-dire un bord venant en contact avec la chaussée avant le reste de la surface de contact dudit motif, et un bord de fuite. On a pu constater l'apparition d'une usure dite "irrégulière" car se développant sur la surface de contact de ces motifs au voisinage du bord de fuite pendant le roulage du pneumatique pourvu de cette bande de roulement.

Pour améliorer la résistance à cette usure irrégulière de cette bande en réduisant la tendance à une usure irrégulière sur les surfaces situées près des bords de fuite la demanderesse a proposé une nouvelle sculpture décrite dans le brevet européen EP 0384182.

Selon ce document, il est proposé une sculpture comprenant des rainures circonférentielles de façon à munir la bande de roulement d'au moins cinq nervures, au moins les nervures délimitées par deux rainures circonférentielles étant munies d'incisions de largeur inférieure à 3 mm, transversales et sensiblement parallèles entre elles, ces incisions étant inclinées d'un angle compris entre 5° et 25° par rapport à une direction perpendiculaire à la surface de roulement de la bande de roulement de sorte que la force résultante exercée, en roulage dans la zone de contact avec le sol, par le sol sur la bande de roulement tend à redresser les incisions vers une inclinaison nulle par rapport à ladite direction perpendiculaire.

Si cette disposition permet effectivement de lutter contre ce type d'usure irrégulière, on constate que l'usure moyenne globale des nervures bord est très sensiblement augmentée par rapport à l'usure globale moyenne des nervures intermédiaires. Cette différence d'usure est, après un certain kilométrage parcouru, la cause d'apparition d'une usure irrégulière dite "en rail" sur les bords longitudinaux des nervures bord; cette usure est liée au développement de contraintes freineuses exercées par la chaussée sur ces nervures bord résultant des différences de longueurs parcourues par les nervures bord et les nervures intermédiaires.

Pour simplifier, l'usure devient plus régulière mais la durée de vie en usure de la bande de roulement est diminuée par rapport à celle d'un pneumatique dont la bande de roulement n'est pas pourvu d'incisions inclinées. Par durée de vie sur usure, on entend la durée d'utilisation possible avant usure complète d'une bande de roulement d'un pneumatique en roulage conduisant soit au changement de pneumatique soit au renouvellement de la bande de roulement par rechapage.

Il existe donc un besoin d'une sculpture pour pneumatiques destinés à équiper l'essieu avant des véhicules poids lourd qui ne présente pas (ou peu) d'usure irrégulière et sensiblement une même vitesse d'usure pour toutes les nervures, tout en conservant une faible vitesse moyenne d'usure globale, ces performances conférant au pneumatique une durée de vie améliorée par rapport au pneumatique de la demande européenne précédemment citée.

Le document EP-A-810 104 montre une bande de roulement dont les incisions possèdent les caractéristiques du préambule de la revendication 1.

Conformément à l'invention, il est proposé une bande de roulement pour pneumatique destiné à équiper l'essieu avant d'un véhicule poids lourd, ayant les caractéristiques de la revendication 1.

Un point d'une incision situé à l'intérieur de la bande est dit en avant du point de l'incision sur la surface de roulement à l'état neuf quand on doit faire tourner, dans le sens de roulage préconisé, un plan radial (plan contenant l'axe de rotation du pneumatique) passant par le point de l'incision sur la surface de roulement à l'état neuf pour l'amener sur le point de l'incision à l'intérieur de la bande.

Par angle voisin de ou égal à 0° avec une perpendiculaire, il faut entendre un angle au maximum égal à 5° (cet angle peut être indifféremment positif ou négatif).

L'inclinaison moyenne d'une incision est donnée par l'angle que fait la direction reliant un point de l'incision sur la surface de roulement de la bande et le point le plus à l'intérieur de la bande pris dans un même plan de coupe perpendiculaire à l'axe de rotation.

Les pneumatiques munis d'une bande de roulement selon l'invention sont prévus pour être montés sur l'essieu avant d'un véhicule poids lourd, l'inclinaison moyenne des incisions des nervures étant choisie de façon que les efforts moyens résultants exercés par le sol sur chacune desdites nervures agissent suivant une direction tendant à redresser lesdites incisions et par là les éléments de gomme délimités par ces incisions. Pour permettre une mise en place aisée de pneumatiques selon l'invention sur un véhicule poids lourd, il peut être prévu que chaque pneumatique comprenne un moyen visible indiquant le sens de roulage préférentiel.

En réalisant une variation de l'inclinaison des incisions entre la surface de roulement à l'état neuf et après différents niveaux d'usure de la bande de roulement, il est possible de régler la répartition des efforts moyens résultants sur les différentes nervures tout au long de l'utilisation du pneumatique équipé d'une bande de roulement selon l'invention. En particulier, l'inclinaison supérieure des incisions après une usure partielle de la bande conduit à maintenir le différentiel d'efforts moyens résultants entre les nervures intermédiaires pourvues d'incisions inclinées et les nervures bords sans incision, ce qui est particulièrement favorable après usure partielle de la bande pour éviter de pénaliser les nervures bord en usure.

Pour obtenir un effet satisfaisant sur l'usure des nervures bord, les incisions à inclinaison variable dans la profondeur sont disposées sur au moins une des nervures intermédiaires et selon un pas moyen p tel que le rapport k,

$$k = \frac{Sne}{Se} \cdot \frac{p}{H}$$ satisfasse la relation suivante :

$0.5 \le k \le 4$

où Sne est la somme des surfaces des nervures non pourvues d'incisions à inclinaison variable dans l'épaisseur selon l'invention (nervures bord et éventuellement autres nervures intermédiaires),

Se est la somme des surfaces des nervures pourvues d'incisions à inclinaison variable dans l'épaisseur selon l'invention,

et H la profondeur moyenne des rainures longitudinales.

Lorsque la valeur de k est inférieure à 0.5, la variation, de rigidité des nervures pourvues d'incisions à inclinaison variable dans l'épaisseur par rapport à la rigidité des nervures bord se trouve être trop prononcée et l'effet recherché n'est pas obtenu. De même lorsque la valeur de k est supérieure à 4, la modification de la rigidité des nervures pourvues d'incisions à inclinaison variable dans l'épaisseur n'est pas suffisante pour régler le problème d'usure irrégulière sur les nervures bord.

Préférentiellement, les incisions ont des profondeurs E voisines des profondeurs H des rainures longitudinales de manière à protéger la totalité de la hauteur des nervures bord.

Préférentiellement, les incisions à inclinaison variable vérifient les valeurs suivantes :

- Inclinaison moyenne entre 5° et 15° ;

- Inclinaison en extrémité : 5° à 25°.

Les incisions à inclinaison variable peuvent présenter une variation d'inclinaison régulière et progressive ou bien une variation selon toute autre forme (par exemple linéaire par morceaux).

D'autres caractéristiques et avantages de l'invention ressortent de la description faite ci-après en référence aux figures annexées qui montrent, à titre d'exemples non limitatifs, des formes de réalisation de l'objet de l'invention.

La figure 1 vue en plan d'une partie d'une bande de roulement d'un véhicule poids lourd selon l'invention;

La figure 2 montre une vue en coupe selon la ligne II-II de la bande montrée à la figure 1;

La figure 3 montre une vue en coupe selon la ligne III-III de la bande montrée à la figure 1.

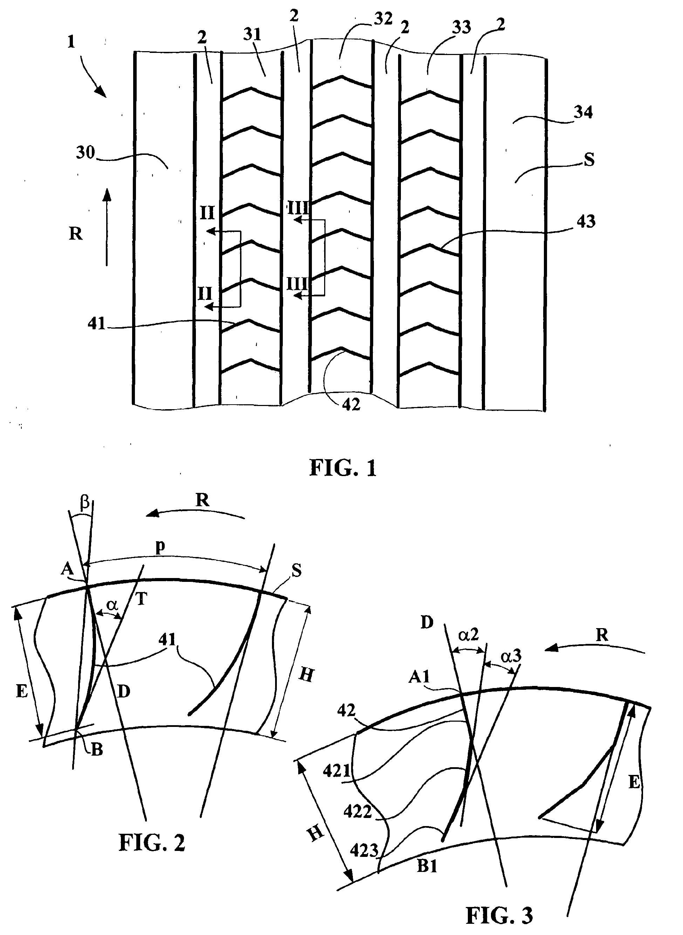

Sur la figure 1, il est représenté une partie de la surface de roulement S d'une bande de roulement 1 d'un pneumatique selon l'invention et destiné à équiper l'essieu avant d'un véhicule poids lourd. Cette bande de roulement 1 comporte trois rainures principales 2 orientées circonférentiellement, ces trois rainures présentant une profondeur H de 18 mm. Ces rainures 2 délimitent trois nervures intermédiaires 31, 32, 33 et deux nervures bord 30, 34, chaque nervure bord limitant axialement la zone de contact de la bande de roulement avec la chaussée pendant le roulage du pneumatique. Les nervures intermédiaires positionnées entre les nervures bord sont pourvues d'une pluralité d'incisions41, 42, 43 d'inclinaison variable dans l'épaisseur de la bande et traversant de part et d'autre chacune desdites nervures intermédiaires. Ces incisions ont, sur la surface de roulement S, une trace en forme de V dont la pointe est dirigé dans le sens de rotation préférentiel (repéré par la flèche R) du pneumatique pourvu de cette bande de roulement.

Le pas moyen p entre les incisions d'inclinaison variable dans l'épaisseur de la bande est, dans le cas présenté, constant pour chaque nervure, mais il pourrait être différent selon la nervure considérée. Ce pas moyen p est ici égal à 38 mm. Le rapport $k = \dfrac{Sne}{Se} \cdot \dfrac{p}{H}$ vaut dans le cas présent 1.7; la surface non incisée Sne étant proportionnelle à la somme des largeurs des nervures bord 30, 34 égales chacune à 45 mm et la surface incisée Se étant proportionnelle à la somme des largeurs des nervures intermédiaires 31, 32, 33 égale chacune à 35 mm.

Sur la figure 2, on montre une coupe de la nervure intermédiaire 31 située près de la nervure bord 30, cette coupe étant réalisée selon la ligne II-II de la figure 1 dans un plan perpendiculaire à l'axe de rotation du pneumatique. Sur cette coupe, on distingue des incisions 41 de profondeur totale E légèrement inférieure à la profondeur H des rainures d'inclinaison variable dans l'épaisseur et présentant une forme curviligne dont l'inclinaison moyenne est égale à 7° (l'inclinaison moyenne de l'incision étant égale à l'angle β que fait, avec une perpendiculaire D à la surface de roulement au point A d'intersection de cette incision avec la surface de roulement, la droite D' située dans le plan de coupe et passant par le point A d'intersection de cette incision avec la surface de roulement et le point B le plus à l'intérieur de la même incision).

L'angle α, que fait, dans le plan de la figure 2, la tangente T au tracé de l'incision au point A sur la surface de roulement à l'état neuf avec la perpendiculaire D à la surface de roulement au même point A, est nul dans l'exemple décrit ; cet angle augmente progressivement et régulièrement avec la profondeur pour atteindre 10° au point B le plus à l'intérieur de la bande de roulement (ce point B étant situé à une distance E de la surface de roulement à l'état neuf).

Sur la figure 3 est montrée une coupe selon la ligne III-III de la nervure centrale 32 de la bande de roulement 1 représentée à la figure 1. Cette nervure centrale comprend une pluralité d'incisions 42 réparties régulièrement dans la direction circonférentielle avec un pas de 38 mm, chacune desdites incisions présentant, vue en coupe, une succession de trois tracés rectilignes, la profondeur totale E de ces incisions étant légèrement inférieure à la profondeur H de chaque rainure 2 (cette dernière profondeur H étant égale à la hauteur de la nervure 32). Le premier tracé 421 est perpendiculaire à la surface de roulement au point A1 d'intersection de l'incision avec la surface de roulement et s'étend sur une profondeur sensiblement égale au tiers de la hauteur H de la nervure centrale 32. Le deuxième tracé rectiligne 422 forme un angle α2 égal à 5° avec le premier tracé 421 et le prolonge sur environ un tiers de la hauteur de la nervure. Le dernier tracé rectiligne 423 forme un angle α3 égal à 5° avec le deuxième tracé 422 et le prolonge sur environ un tiers de la hauteur de la nervure jusqu'au point BI d'extrémité de l'incision.

L'invention n'est pas limitée aux exemples décrits et représentés et diverses modifications peuvent y être apportées sans sortir de son cadre.

En particulier, les nervures intermédiaires situées directement au voisinage des nervures bord peuvent comporter en plus une pluralité d'incisions ne débouchant que sur leur bord situé du côté desdites nervures bord; ces incisions ayant, comme connu, pour fonction de protéger les nervures intermédiaires d'une usure irrégulière affectant les bords longitudinaux desdites nervures. Ces dernières incisions peuvent suivre le même profil que les incisions d'inclinaison variable dans l'épaisseur et être également d'inclinaison variable.

En outre, et sur toutes les nervures, y compris celles du bord, des incisions de faible profondeur devant la profondeur des rainures peuvent être réalisées : ces incisions, de profondeur comprise entre quelques dixièmes de millimètres à deux millimètres n'exercent un rôle que lorsque la bande de roulement est neuve avant de disparaître après usure dans les tous premiers kilomètres de roulage et ne modifient en rien les rigidités de la sculpture de la bande de roulement.

**Revendications**

1. Bande de roulement (1) pour pneumatique destiné à l'équipement d'un essieu avant d'un véhicule poids lourd, ce pneumatique comprenant un moyen visible indiquant un sens de roulage préférentiel et comportant une armature de carcasse radiale surmontée d'une armature de sommet, cette bande comprenant des rainures (2) d'orientation générale circonférentielle délimitant au moins trois nervures (30, 31, 32, 33, 34), deux desdites nervures formant les bords (30, 34) de la bande, certaines des nervures intermédiaires (31, 32, 33) étant munies d'une pluralité d'incisions (41, 42, 43) de largeur inférieure à 3 mm, de profondeur E et d'orientation générale transversale et sensiblement parallèles entre elles, ces incisions présentant une inclinaison moyenne non nulle par rapport à la direction perpendiculaire à la surface de roulement (S) de la bande à l'état neuf de sorte que la force résultante exercée en roulage dans la zone de contact avec la chaussée par ladite chaussée sur la bande tend à redresser les incisions vers une inclinaison moyenne nulle par rapport à cette perpendiculaire, cette bande étant telle que, vue dans un plan de coupe perpendiculaire à l'axe de rotation du pneumatique, chaque incision (41, 42, 43) formée sur les nervures intermédiaires (31, 32, 33) fait, sur la surface de roulement à l'état neuf de la bande et au plus sur un tiers de sa profondeur E, un angle au plus égal à 5° avec une perpendiculaire à ladite surface au point d'intersection, chacune de ces incisions faisant avec la même perpendiculaire un angle qui augmente dans l'épaisseur de la bande, les points de ladite incision les plus à l'intérieur dans la bande étant situés, par rapport à ladite perpendiculaire, de manière à être en avant des points de l'incision situés sur la surface de roulement de la bande à l'état neuf cette bande de roulement étant **caractérisée en ce que** les incisions (41, 42, 43) d'inclinaison variable dans l'épaisseur sont régulièrement réparties dans la direction circonférentielle avec un pas p satisfaisant la relation suivante :

$$0.5 \leq \frac{Sne}{Se} \cdot \frac{p}{H} \leq 4$$

où Sne est la somme des surfaces des nervures (30, 34) non pourvues d'incisions à inclinaison variable dans l'épaisseur,
Se est la somme des surfaces des nervures (31, 32, 33) pourvues d'incisions (41, 42, 43) à inclinaison variable dans l'épaisseur,
H est la profondeur moyenne des rainures longitudinales (2).

2. Bande de roulement (1) selon la revendication 1 **caractérisée en ce que** l'inclinaison moyenne des incisions (41, 42, 43) d'inclinaison variable dans l'épaisseur est comprise entre 5° et 15°.

3. Bande de roulement (1) selon l'une des revendications 1 ou 2 **caractérisée en ce que** l'inclinaison d'extrémité au point le plus à l'intérieur de la bande de roulement de chaque incision (41, 42, 43) d'inclinaison variable dans l'épaisseur est comprise entre 5° et 25°.

**Claims**

1. A tread (1) for a tyre which is intended to be fitted on a front axle of a heavy vehicle, this tyre comprising a visible means indicating a preferred direction of travel and comprising a radial carcass reinforcement surmounted by a crown reinforcement, this tread comprising grooves (2) of circumferential general orientation defining at least three ribs (30, 31, 32, 33, 34), two of said ribs forming the edges (30, 34) of the tread, some of the intermediate ribs (31, 32, 33) being provided with a plurality of incisions (41, 42, 43) of a width of less than 3 mm, of a depth E and of transverse general orientation and substantially parallel to each other, these incisions having an average inclination other than zero relative to the direction perpendicular to the running surface (S) of the tread when new such that the resulting force exerted during travel in the zone of contract with the roadway by said roadway on the tread tends to straighten the incisions towards a zero average inclination relative to this perpendicular line, this tread being such that, viewed in a section plane perpendicular to the axis of rotation of the tyre, each incision (41, 42, 43) formed on the intermediate ribs (31, 32, 33) forms, on the running surface of the tread when new and at most over one-third of its depth E, an angle at most equal to 5° with a line perpendicular to said surface at the point of intersection, each of these incisions forming with the same perpendicular line an angle which increases in the thickness of the tread, the points of said incision which are farthest to the inside in the tread being located, relative to said perpendicular line, so as to be in front of the points of the incision which are located on the running surface of the tread when new, this tread being **characterised in that** the incisions (41, 42, 43) of variable inclination within the thickness are regularly distributed in the circumferential direction with a pitch p which satisfies the following relationship:

$$0.5 \leq \frac{Sne}{Se} \cdot \frac{p}{H} \leq 4$$

where Sne is the total of the surfaces of the ribs (30, 34) not provided with incisions of variable inclination within the thickness,

Se is the total of the surfaces of the ribs (31, 32, 33) provided with incisions (41, 42, 43) of variable inclination within the thickness,

H is the average depth of the longitudinal grooves (2).

2. A tread (1) according to Claim 1, **characterised in that** the average inclination of the incisions (41, 42, 43) of variable inclination within the thickness is between 5° and 15°.

3. A tread (1) according to one of Claims 1 or 2, **characterised in that** the end inclination at the point farthest to the inside of the tread of each incision (41, 42, 43) of variable inclination within the thickness is between 5° and 25°.

**Patentansprüche**

1. Laufstreifen (1) für einen Luftreifen, der die Vorderachse eines Lastkraftwagens ausstatten soll, wobei der Luftreifen ein sichtbares Mittel aufweist, das die bevorzugte Fahrtrichtung angibt, und eine radiale Karkassenbewehrung besitzt, über der eine Scheitelbewehrung liegt, wobei der Laufstreifen Rillen (2) von allgemein umlaufender Orientierung aufweist, die mindestens drei Rippen (30, 31, 32, 33, 34) begrenzen, wobei zwei der Rippen die Ränder (30, 34) des Laufstreifens bilden, einige mittlere Rippen (31, 32, 33) mit einer Vielzahl von Einschnitten (41, 42, 43) versehen sind, die eine Breite unter 3 mm, eine Tiefe E und eine quer verlaufende allgemeine Orientierung aufweisen und in etwa parallel zueinander verlaufen, wobei die Einschnitte in Bezug auf die Richtung senkrecht zur Lauffläche (S) des Laufstreifens im Neuzustand eine von Null verschiedene mittlere Neigung aufweisen, sodass die bei der Fahrt im Kontaktbereich mit der Fahrbahn von der Fahrbahn auf den Laufstreifen ausgeübte resultierende Kraft die Einschnitte eher in eine in Bezug auf diese Senkrechte mittlere Neigung Null aufrichtet, wobei der Laufstreifen so ist, dass in einer Schnittebene senkrecht zur Drehachse des Luftreifens jeder Einschnitt (41, 42, 43), der an den mittleren Rippen (31, 32, 33) gebildet ist, an der Lauffläche des Laufstreifens im Neuzustand und höchstens über ein Drittel seiner Tiefe E einen Winkel von höchstens 5° mit einer Senkrechten zur Lauffläche an dem Schnittpunkt bildet, wobei jeder Einschnitt mit dieser Senkrechten einen Winkel bildet, der in der Dicke des Laufstreifens größer wird, wobei die Punkte des Einschnitts, die in dem Laufstreifen am weitesten innen liegen, in Bezug auf die Senkrechte so angeordnet sind, dass sie vor den Punkten des Einschnitts liegen, die sich an der Lauffläche des Laufstreifens im Neuzustand befinden,

wobei der Laufstreifen **dadurch gekennzeichnet ist, dass** die Einschnitte (41, 42, 43) von in der Dicke variabler Neigung mit einem Abstand p, der die folgenden Beziehung erfüllt, in Umfangsrichtung regelmäßig verteilt sind:

$$0,5 \leq \frac{Sne}{Se} \cdot \frac{p}{H} \leq 4$$

wobei Sne die Summe der Oberflächen der Rippen (30, 34) bedeutet, die nicht mit Einschnitten von in der Tiefe variabler Neigung gemäß der Erfindung versehen sind,

Se die Summe der Oberflächen der Rippen (31, 32, 33) ist, die mit Einschnitten (41, 42, 43) versehen sind, die eine in der Tiefe variable Neigung aufweisen, und

H die mittlere Tiefe der Längsrillen (2) bedeutet.

2. Laufstreifen (1) nach Anspruch 1, **dadurch gekennzeichnet, dass** die mittlere Neigung der Einschnitte (41, 42, 43) mit in der Dicke variabler Neigung im Bereich von 5 bis 15° liegt.

3. Laufstreifen (1) nach einem der Ansprüche 1 oder 2, **dadurch gekennzeichnet, dass** die Endneigung an dem Punkt jedes Einschnitts (41, 42, 43) von in der Dicke variabler Neigung, der in dem Laufstreifen am weitesten innen liegt, im Bereich von 5 bis 25° liegt.

FIG. 1

FIG. 2

FIG. 3